# EUROPÄISCHE PATENTANMELDUNG

(11) **EP 1 693 249 A2**
(43) Veröffentlichungstag der Anmeldung: **23.08.2006**
(21) Anmeldenummer: 06003010.3
(22) Anmeldetag: 15.02.2006
(51) Int. Cl.: B60Q 1/00

(54) **Leuchtenanordnung**

(30) Priorität: 21.02.2005 DE 102005007864
(71) Anmelder: GM Global Technology Operations, Inc., Detroit, MI 48265-3000 (US)
(72) Erfinder: Eckert, Heiko, 55411 Bingen-Büdesheim (DE); Feid, Thomas, 68239 Mannheim (DE); Gottwald, Wolfgang, 23600 Morlos Jaen (ES); Kathmann, Jörg, 33154 Salzkotten (DE); Kistinger, Thomas, 64347 Griesheim (DE); Krieg, Gregor, 63450 Hanau (DE); Reichmann, Karl-Heinz, 64589 Stockstadt (DE); Schneider, Ingolf, 65428 Rüsselsheim (DE)
(74) Vertreter: Daniel, Ulrich W.P.

(57) **Zusammenfassung**

Die vorliegende Erfindung betrifft eine Leuchtenanordnung (1), insbesondere im Kraftfahrzeugbereich, mit einem Gehäuse zur Aufnahme mindestens einer Lichtquelle (2, 3, 4); und mit einer Basis-Zierblendeneinrichtung (5) zum Abdecken von lichttechnisch nicht relevanten Abschnitten der Leuchtenanordnung (1) in dem Gehäuse; wobei die Basis-Zierblendeneinrichtung (5) einteilig ohne etwaige, offengelegte Befestigungseinrichtungen zur Vermittlung eines optisch ansprechenden Gesamteindrucks und mit mindestens einem zusätzlichen Zierblendenmittel (10, 11, 12) nach dem Baukastenprinzip aufrüstbar ausgebildet ist.

## Beschreibung

Die vorliegende Erfindung betrifft eine Leuchtenanordnung, insbesondere im Kraftfahrzeugbereich.

Obwohl auf beliebige Leuchtenanordnungen anwendbar, werden die vorliegende Erfindung sowie die ihr zugrunde liegende Problematik in Bezug auf eine Leuchtenanordnung an Board eines Kraftfahrzeuges erläutert.

Leuchtenanordnungen im Kraftfahrzeugbereich dienen beispielsweise der Verkehrssicherheit. Mit ihrer Hilfe wird bei Dunkelheit oder schlechter Sicht die Fahrbahn vor dem Kraftfahrzeug ausgeleuchtet. Ferner dienen die Leuchtenanordnungen der Sichtbarmachung des Kraftfahrzeuges für nachfolgende Fahrzeuge durch entweder Aussenden von Licht oder durch Reflektieren des von dem nachfolgenden Fahrzeug auftreffenden Lichts.

Auf Grund eines starken Einflusses des Fahrzeugdesigns auf das Image eines Kraftfahrzeuges unterliegen Leuchtenanordnungen im Kraftfahrzeugbereich heute stärker als bisher den Einflüssen des Fahrzeugdesigns. Daher sind mittlerweile bei der Konstruktion und Ausgestaltung von Scheinwerfern für Fahrzeuge Randbedingungen zu berücksichtigen, die vor wenigen Jahren bei der Entwicklung und Konstruktion von Leuchtenanordnungen bzw. Scheinwerfern keine oder nur eine untergeordnete Rolle gespielt haben. So wird beispielsweise mittlerweile bei Fahrzeugleuchten bzw. Fahrzeugscheinwerfern eine brillante transparente Erscheinung der Leuchte angestrebt. Hierzu finden brillante transparente Abdeckscheiben Verwendung, die einen Aufnahmebereich des Gehäuses abdecken. Auf Grund dieser transparenten Abdeckscheiben ist ein sehr guter Einblick in die Scheinwerfer bzw. die Leuchtenanordnungen von außen möglich. Dabei ist es aus optischen Erwägungen wünschenswert, ein modernes und ansprechendes Design zu verwirklichen.

Aus diesem Grunde wird eine Leuchtenanordnung häufig mit einer Zierblende versehen, um das optische Erscheinungsbild dieser Leuchtenanordnung hervorzuheben. Bei einer derartigen Zierblende handelt es sich gewöhnlich um ein typischerweise aluminium-bedampftes Einzelteil, das der Leuchtenanordnung eine besonders hochwertige Charakteristik verleihen soll. Die mit einer Zierblende versehene Leuchtenanordnung kann beispielsweise in dem Aufnahmebereich des Gehäuses hinter der durchsichtigen Abdeckscheibe angeordnet sein, so dass nicht nur die Leuchtenanordnung selbst, sondern auch die jeweilige Zierblende von außen erkennbar ist.

Die Druckschrift DE 199 06 527 A1 beschreibt allgemein eine Leuchtenanordnung für ein Kraftfahrzeug mit einer Abdeckscheibe und einem Gehäuse, in dem ein Doppel-Ellipsoid-Scheinwerfer angeordnet ist, der eine Glühlampe mit einem Reflektor aufweist. Dabei ist eine Blende vorgesehen, welche den Doppel-Ellipsoid-Scheinwerfer fixiert und welche eine konische Form aufweist.

Moderne Leuchtenanordnungen weisen demnach im Allgemeinen eine einteilige Blende auf, welche oberflächenbehandelt wird, um eine hohe Oberflächenqualität und einen differenzierten optischen Eindruck zu erreichen.

An diesem Ansatz gemäß dem Stand der Technik hat sich jedoch die Tatsache als nachteilig herausgestellt, dass die Möglichkeiten zur Variantenbildung stark eingeschränkt sind, da die Blendeneinrichtung nur als ganzes einer Behandlung unterworfen werden kann. Eine Maskierung, das heißt einer Behandlung ausgewählter Bereiche, ist in der Regel sehr aufwändig und liefert qualitativ wenig zufriedenstellende Ergebnisse.

Es ist der Anmelderin ferner der Ansatz bekannt, zusätzliche Zierblendenmittel als separate Zierelemente herzustellen und diese separat Oberflächenzubehandeln, um einen von der Basis-Blendeneinrichtung differenzierten optischen Eindruck zu erreichen.

An diesem Ansatz hat sich die Tatsache als nachteilig herausgestellt, dass die zusätzlichen Zierblendenmittel mittels eines zusätzlichen Werkzeugs und eines zusätzlichen Herstellungsverfahrens hergestellt werden müssen. Dies stellt einen zusätzlichen Arbeitsaufwand und zusätzliche Herstellungskosten dar. Ferner müssen die zusätzlichen Zierblendenmittel mittels Befestigungseinrichtungen an der Blendeneinrichtung befestigt werden, da die Blendeneinrichtung an sich ohne zusätzliche Zierblendenmittel nicht die Design-Vorgaben erfüllt und das optische Erscheinungsbild der Leuchtenanordnung eher nachteilig beeinflusst, da die Zierblendeneinrichtung im Allgemeinen Befestigungsmittel für eine Befestigung der zusätzlichen Zierblendenmitteln aufweist, welche im Sichtbereich aus Sicht von außen angeordnet sind und somit den optischen Gesamteindruck nachteilig beeinflussen.

Der vorliegenden Erfindung liegt daher die Aufgabe zugrunde, eine kostengünstig herstellbare Leuchtenanordnung mit einer Zierblende bereitzustellen, welche keinen Design-Restriktionen unterliegt und welche auf einfache und kostengünstige Weise die Möglichkeit zur Variantenbildung gewährleistet.

Erfindungsgemäß wird diese Aufgabe durch eine Leuchtenanordnung mit den Merkmalen des Patentanspruchs 1 gelöst.

Die der vorliegenden Erfindung zugrundeliegende Idee besteht darin, dass die Leuchtenanordnung ein Gehäuse zur Aufnahme mindestens einer Lichtquelle und eine Basis-Zierblendeneinrichtung zum Abdecken von lichttechnisch nicht relevanten Abschnitten der Leuchtenanordnung in dem Gehäuse aufweist, wobei die Basis-Zierblendeneinrichtung einteilig ohne etwaige, offengelegte unästhetische Funktionsabschnitte zur Vermittlung eines optisch ansprechenden Gesamteindrucks und mit mindestens einem zusätzlichen Zierblendenmittel nach dem Baukastenprinzip aufrüstbar ausgebildet ist.

Die vorliegende Erfindung weist gegenüber dem Stand der Technik den Vorteil auf, dass die Leuchtenanordnung entweder die Basis-Zierblendeneinrichtung als kostengünstige Gesamtblende für beispielsweise niederpreisige Fahrzeuge oder die Basis-Zierblendeneinrichtung mit zusätzlichen Zierblendenmitteln als Gesamtblende bei beispielsweise höherpreisigen Fahrzeugen aufweisen kann. Die Basis-Zierblendeneinrichtung kann derart nach dem Baukastenprinzip beliebig modifiziert werden, dass ein differenzierter optischer Eindruck gewährleistet wird. Somit kann die Gesamtblende der Leuchtenanordnung sowohl aus einem Teil als auch aus mehreren Teilen bestehen, wobei jederzeit - auch bei lediglich Vorsehen der Basis-Zierblendeneinrichtung - der optische Gesamteindruck die Designanforderungen erfüllt, da bereits bei der Basis-Zierblendeneinrichtung keine Befestigungsmittel oder andere etwaige unästhetische Abschnitte freigelegt sind.

Somit kann bei niederpreisigen Fahrzeugen die Basis-Zierblendeneinrichtung als vollständige und ästhetische Gesamtblende hergestellt, oberflächenbehandelt und verwendet werden, wohingegen bei höherpreisigen Fahrzeugen zusätzliche einzelne Zierblendenmittel hergestellt, individuell oberflächenbehandelt, beispielsweise hochglanzverspiegelt, und anschließend mit der Basis-Zierblendeneinrichtung zum Erreichen eines hochwertigeren Designs der neuen Gesamtblende nach dem Baukastenprinzip gekoppelt werden. D. h. die Basis-Zierblendeneinrichtung kann somit sowohl bei niederpreisigen Fahrzeugen als vollständige Zierblendeneinrichtung als auch bei höherpreisigen Fahrzeugen in Kombination mit zusätzlichen Zierblendenmitteln eingesetzt werden. Durch das Baukastenprinzip ist eine kostengünstige Blendeneinrichtung herstellbar, welche eine hohe Vielzahl an Designvariationen gewährleistet.

Vorteilhafte Ausgestaltungen und Weiterbildungen der vorliegenden Erfindung ergeben sich aus den Unteransprüchen sowie der Beschreibung unter Bezugnahme auf die Figuren der Zeichnung.

Gemäß einer bevorzugten Weiterbildung weist die Basis-Zierblendeneinrichtung einen konkav gewölbten Flächenabschnitt und mindestens einen zylinderförmigen Rohrabschnitt für eine Aufnahme der mindestens einen Lichtquelle auf, welcher von dem gewölbten Flächenabschnitt hervorsteht. Der zylinderförmige Rohrabschnitt ist vorzugsweise derart ausgebildet, dass von außen keine Befestigungsmittel oder andere unästhetische Elemente sichtbar sind, d. h. ein optisch ansprechender Gesamteindruck wird bereits durch die Basis-Zierblendeneinrichtung gewährleistet.

Gemäß einer weiteren bevorzugten Weiterbildung ist die Basis-Zierblendeneinrichtung aus einem geeigneten Kunststoff hergestellt und gesamtheitlich oberflächenbehandelt, beispielsweise hochglanzverspiegelt. Durch die einteilige Ausbildung der Basis-Zierblendeneinrichtung kann diese auf einfache und kostengünstige Weise ganzheitlich oberflächenbehandelt werden. Die Basis-Zierblendeneinrichtung weist vorzugsweise an den sichtbaren Flächen eine Beschichtung auf, welche durch eine Oberflächenbehandlung, beispielsweise durch ein Aufdampfungsverfahren, aufgebracht ist. Die Beschichtung kann beispielsweise Aluminium, Chrom und/oder Silber oder eine Legierung davon enthalten.

Gemäß einem weiteren bevorzugten Ausführungsbeispiel ist auch das mindestens eine zusätzliche Zierblendenmittel aus einem geeigneten Kunststoff hergestellt und oberflächenbehandelt, beispielsweise ebenfalls hochglanzverspiegelt. Durch das Baukastenprinzip kann das zusätzliche bzw. die zusätzlichen Zierblendenmittel in einer sich von der Basis-Zierblendeneinrichtung unterscheidenden Farbe bzw. Verspiegelung ausgebildet werden. Dadurch werden die verschiedensten optischen Varianten für die Leuchtenanordnung bereitgestellt.

Vorzugsweise weist das mindestens eine zusätzliche Zierblendenmittel eine Befestigungseinrichtung für eine lösbare Befestigung an der Basis-Zierblendeneinrichtung auf. Somit sind keine Befestigungsmittel an der Basis-Zierblendeneinrichtung vorzusehen, so dass diese bereits als Einzelteil einen optisch ansprechenden Gesamteindruck liefert. Für höherpreisige Fahrzeuge können aus designtechnischen Gründen die zusätzlichen Zierblendenmittel mittels den Befestigungseinrichtungen auf einfache und kostengünstige Weise auf zugeordnete Abschnitte der Basis-Zierblendeneinrichtung aufgebracht werden. Die Befestigungseinrichtung kann beispielsweise als Steck-, Clips- und/oder Rastverbindung ausgebildet sein.

Das mindestens eine zusätzlich Zierblendenmittel ist vorteilhaft als Blendenring ausgebildet, welcher an einem zugeordneten zylinderförmigen Rohrabschnitt der Basis-Zierblendeneinrichtung zum Liefern eines erweiterten ansprechenden Gesamteindrucks mittels geeigneter Befestigungseinrichtung anbringbar ist. Die Blendenringe können sich jeweils in ihrer Verspiegelung und/oder in ihrer Farbe von der Basis-Zierblendeneinrichtung bzw. sich jeweils untereinander unterscheiden, um ein erwünschtes Design zu verwirklichen.

Die Leuchtenanordnung weist beispielsweise eine Blinkerleuchte, eine Abblendleuchte eine Standleuchte, eine Fernleuchte, eine Bremsleuchte, eine Warnleuchte und/oder einen Reflexbereich auf. Es ist für einen Fachmann offensichtlich, dass die voranstehenden Leuchten bzw. Reflexbereiche beliebig miteinander kombiniert werden können.

Die vorliegende Erfindung wird nachfolgend anhand des in der schematischen Figur angegebenen Ausführungsbeispiels näher erläutert.

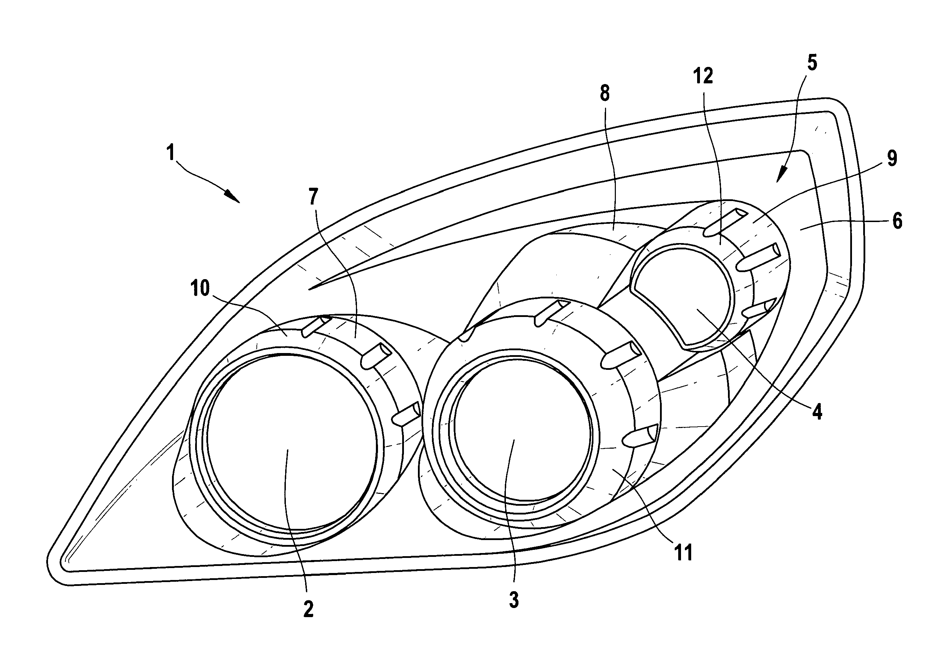

Dabei illustriert Fig. 1 eine perspektivische Ansicht einer Leuchtenanordnung 1 gemäß einem bevorzugten Ausführungsbeispiel der vorliegenden Erfindung.

Die Leuchtenanordnung 1 gemäß dem vorliegenden Ausführungsbeispiel ist beispielsweise in einem zugeordneten Karosserieabschnitt eines Kraftfahrzeuges vorgesehen. Die Leuchtenanordnung 1 gemäß Fig. 1 besteht aus einer ersten Leuchte 2, beispielsweise einem Stand- und/oder einem Fernlicht, einer zweiten Leuchte 3, beispielsweise einem Abblendlicht, und einer dritten Leuchte 4, beispielsweise einem Blinklicht. Es ist für einen Fachmann offensichtlich, dass auch andere Leuchten, beispielsweise eine Bremsleuchte, eine Warnleuchte, ein Reflexbereich oder dergleichen analog vorgesehen sein können.

Wie in Fig. 1 ersichtlich ist, weist die Leuchtenanordnung 1 eine Basis-Zierblende 5 auf, welche einen konkav gewölbten Flächenabschnitt 6 und drei zylinderförmige Rohrabschnitte 7, 8 und 9 umfasst. Die zylinderförmigen Rohrabschnitte 7, 8 und 9 dienen einer Aufnahme der jeweils zugeordneten Leuchten, wobei beispielsweise der zylinderförmige Rohrabschnitt 7 die erste Leuchte 2, der zylinderförmige Rohrabschnitt 8 die zweite Leuchte 3 und der zylinderförmige Rohrabschnitt 9 die dritte Leuchte 4 aufnimmt. Die jeweiligen zylinderförmigen Rohrabschnitte 7, 8 und 9 stehen jeweils von dem konkav gewölbten Flächenabschnitt 6 in Richtung der Außenseite der Leuchtenanordnung hervor.

Die Basis-Zierblende 5 ist gemäß dem vorliegenden Ausführungsbeispiel bereits derart zum Liefern eines ästhetischen Gesamteindrucks ausgebildet, dass keine Befestigungsnasen, Clips oder andere unästhetische Elemente an den zylinderförmigen Rohrabschnitten 7, 8, 9 vorhanden und insbesondere von außen sichtbar sind. Dadurch kann die Basis-Zierblende 5 für billigere Fahrzeuge als bereits fertige Zierblende mit einem optisch angenehmen Gesamteindruck verwendet werden.

In diesem Fall kann die Basis-Zierblende 5 mittels eines einzigen und einheitlichen Verfahrens oberflächenbehandelt werden. Die Zierblende 5 wird beispielsweise mittels eines Spritzgussverfahrens separat in einem Werkzeug hergestellt. Die sichtbaren Oberflächen der Zierblende 5 sind vorzugsweise mit einer Beschichtung versehen. Als Beschichtungsverfahren eignet sich z.B. ein gängiges CVD-Verfahren (CVD = Chemical Vapour Deposition) oder ein PVD-Verfahren (PVD = Physical Vapour Deposition). Denkbar wären allerdings auch andere Verfahren, beispielsweise kann die Beschichtung auch durch Aufspritzen, Aufdampfen, Abscheiden, Aufschleudern, Sputtern oder dergleichen erzeugt werden. Denkbar wäre auch, eine eigens konstruierte Folie auf der Zierblende 5 aufzubringen.

Als Material für die Basis-Zierblende 5 kann jedes Material verwendet werden, welches den entsprechenden, gewünschten optischen Gesamteindruck bietet. Vorteilhafterweise ist hier eine deckende, lichtundurchlässige Beschichtung vorgesehen. Insbesondere aus herstellungstechnischen Gründen ist es besonders vorteilhaft, wenn für das Material der Beschichtung daher Aluminium oder eine Aluminium enthaltende Legierung verwendet wird. Aluminium eignet sich besonders gut, da es mit bestehenden Bedampfungsanlagen sehr einfach aufgebracht werden kann. Insbesondere dann, wenn sich die Leuchtenanordnung im Inneren eines z.B. durch eine Abdeckscheibe geschützten Raums befindet, kann damit auch kein Schmutz und nahezu keine Feuchtigkeit an diese Aluminium-Beschichtung gelangen, so dass die Gefahr einer mechanischen Beschädigung durch Schmutzpartikel sowie die Gefahr einer Korrosion dieser Beschichtung auf ein Mindestmaß reduziert ist. Zusätzlich oder alternativ kann für die Beschichtung auch ein Material aus Silber, Chrom, Nickel, Messing, Edelstahl etc. oder eine Legierung daraus vorgesehen sein. Denkbar wäre auch, dass die Beschichtung als metallisch beschichtete Kunststofffolie oder als Kunststoff beschichtete Metallfolie ausgebildet ist.

Die Basis-Zierblendeneinrichtung 5 kann auch mit Befestigungsmitteln für eine etwaige Befestigung von zusätzlichen Zierblendenmitteln versehen sein, wobei die Befestigungsmittel vorzugsweise im Inneren der zylinderförmigen Rohrabschnitte 7, 8 und 9 derart angeordnet sind, dass sie aus Sicht von außen für einen optisch ästhetischen Gesamteindruck verdeckt sind.

Wie in Fig. 1 dargestellt ist, können insbesondere für höherpreisige Fahrzeuge zusätzliche Blenden 10, 11, 12 vorgesehen sein, welche beispielsweise jeweils in Form eines Blendenringes ausgebildet sind.

Analog zur Basis-Zierblende 5 sind die Blendenringe 10, 11, 12 in einem eigenen Werkzeug mittels eines Spritzgussverfahrens aus einem geeigneten Kunststoff hergestellt. Die Blendenringe 10, 11 und 12 können beispielsweise ebenfalls mittels eines geeigneten Verfahrens oberflächenbehandelt, beispielsweise hochglanzverspiegelt, werden. Bezüglich der Materialien und Behandlungsverfahren wird auf die Ausführungen bezüglich der Basis-Zierblende 5 verwiesen.

Die Blendenringe 10, 11 und 12 können aus designtechnischen Gründen unterschiedlich zu dem Basis-Zierblendenelement 5 oberflächenbehandelt bzw. farblich ausgestaltet werden, um einen eleganten und edlen Gesamteindruck der Leuchtenanordnung 1 zu schaffen.

Die Blendenringe 10, 11 und 12 sind vorzugsweise entsprechend der Form der Basis-Zierblende 5 als eher breitere oder dünnere Blendenringe ausgebildet. Dabei können die einzelnen Blendenringe 10, 11 und 12 untereinander ebenfalls mit unterschiedlichen Farben, Oberflächenbehandlungen, Krümmungen bzw. Abmessungen ausgebildet werden.

Die einzelnen Blendenringe 10, 11 und 12 werden jeweils auf zugeordnete Rohrabschnitte 7, 8 und 9 aufgesteckt und durch geeignete Befestigungsmittel daran befestigt. Als Befestigungsmittel wird beispielsweise eine Steck-, Rast- oder Clipsverbindung verwendet. Die einzelnen Clips bzw. die einzelnen Rastnasen sind vorzugsweise an den Blendenringen 10, 11 und 12 vorgesehen, so dass die Basis-Zierblende 5 keinerlei derartige Befestigungsmittel aufweist. Somit besitzt die Basis-Zierblende 5 auch ohne Verwendung von Blendenringen 10, 11 und 12 einen ästhetischen Gesamteindruck ohne sichtbaren Befestigungsmitteln. Die Befestigungsmittel sind vorzugsweise an den Blendenringen 10, 11 und 12 derart angebracht, dass sie nach einer Befestigung der Blendenringe 10, 11 und 12 an den zugeordneten zylindrischen Rohrabschnitten 7, 8 und 9 aus Sicht von außen verdeckt sind, um den optischen Gesamteindruck nicht nachteilig zu beeinflussen.

Durch die designtechnische Variantenmöglichkeit sind verschiedene optische Ausgestaltungen möglich. Beispielsweise ist die Basis-Zierblende 5 schwarz ausgeführt, wohingegen die aufgesteckten Blendenringe 10, 11 und 12 durch ein geeignetes Verfahren hochglanzverspiegelt sind, wie oben bereits erläutert worden ist. Es ist für einen Fachmann offensichtlich, dass eine Vielzahl an designtechnischen Modifikationen möglich ist.

Durch die bereits einen optisch ästhetischen Gesamteindruck aufweisende Basis-Zierblendeneinrichtung 5 kann diese auf vorteilhafte Weise für niederpreisige Fahrzeuge als End-Zierblendeneinrichtung und durch beliebige Modifikation mit zusätzlichen Blendenringen 10, 11 und 12 für höherpreisige Fahrzeuge verwendet werden, um diesen einen edleren optischen Gesamteindruck zu verleihen. Die vorliegende Erfindung schafft somit eine Flexibilität bezüglich einer Variantenbildung sowie einen Stückkostenvorteil bei der einfachen Ausführung, in welcher die Basis-Zierblende 5 bereits als vollständige Zierblende verwendet wird. Zudem wird die Erhaltung der Werkzeuggesamtkapazität gewährleistet, da beispielsweise bei einem Werkzeugausfall von einer nun nicht weiter möglichen Variante auf eine optisch gleichwertige Ersatzvariante ausgewichen werden kann.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

Die vorliegende Erfindung ist nicht auf die angegebenen Materialien, Werkstoffe und Formen beschränkt. Vielmehr lassen sich hier auch andere Beschichtungsmaterialien verwenden, die der Blendeneinrichtung einen besonderen optischen Gesamteindruck vermitteln.

Auch muss als Material der Blendeneinrichtung nicht notwendigerweise Kunststoff verwendet werden, wenngleich Kunststoff aufgrund seiner herstellungstechnischen Vorteile besonders vorteilhaft ist.

Die vorliegende Erfindung ist ferner nicht auf die angegebenen Lichtquellen beschränkt, sondern lässt sich auf beliebige Lichtquellen für oder in einem Kraftfahrzeug einsetzen.

### Bezugszeichenliste

- 1: Leuchtenanordnung
- 2: erste Leuchte
- 3: zweite Leuchte
- 4: dritte Leuchte
- 5: Basis-Zierblendeneinrichtung
- 6: konkav gewölbter Flächenabschnitt
- 7: zylinderförmiger Rohrabschnitt
- 8: zylinderförmiger Rohrabschnitt
- 9: zylinderförmiger Rohrabschnitt
- 10: Blendenring
- 11: Blendenring
- 12: Blendenring

## Patentansprüche

1. Leuchtenanordnung (1), insbesondere im Kraffahrzeugbereich, mit:
einem Gehäuse zur Aufnahme mindestens einer Lichtquelle (2, 3, 4); und mit
einer Basis-Zierblendeneinrichtung (5) zum Abdecken von lichttechnisch nicht relevanten Abschnitten der Leuchtenanordnung (1) in dem Gehäuse;
wobei die Basis-Zierblendeneinrichtung (5) einteilig ohne etwaige, offengelegte unästhetische Funktionsabschnitte zur Vermittlung eines optisch ansprechenden Gesamteindrucks und mit mindestens einem zusätzlichen Zierblendenmittel (10, 11, 12) nach dem Baukastenprinzip aufrüstbar ausgebildet ist.

2. Leuchtenanordnung (1) nach Anspruch 1, **dadurch gekennzeichnet, dass** die Basis-Zierblendeneinrichtung (5) einen konkav gewölbten Flächenabschnitt (6) und mindestens einen zylinderförmigen Rohrabschnitt (7, 8, 9) für eine Aufnahme der mindestens einen Lichtquelle (2, 3, 4) aufweist, welcher von dem konkav gewölbten Flächenabschnitt (6) hervorsteht.

3. Leuchtenanordnung (1) nach Anspruch 1 oder 2, **dadurch gekennzeichnet, dass** die Basis-Zierblendeneinrichtung (5) aus einem geeigneten Kunststoff hergestellt und gesamtheitlich oberflächenbehandelt, beispielsweise hochglanzverspiegelt, ist.

4. Leuchtenanordnung (1) nach wenigstens einem der vorhergehenden Ansprüche, **dadurch gekennzeichnet, dass** die Basis-Zierblendeneinrichtung (5) an den sichtbaren Flächen eine Beschichtung aufweist, beispielsweise eine Aluminium, Chrom und/oder Silber oder eine Legierung davon enthaltende Beschichtung.

5. Leuchtenanordnung (1) nach wenigstens einem der vorhergehenden Ansprüche, **dadurch gekennzeichnet, dass** das mindestens eine zusätzliche Zierblendenmittel (10, 11, 12) aus einem geeigneten Kunststoff hergestellt und oberflächenbehandelt, beispielsweise hochglanzverspiegelt, ist.

6. Leuchtenanordnung (1) nach wenigstens einem der vorhergehenden Ansprüche, **dadurch gekennzeichnet, dass** das mindestens eine zusätzlich Zierblendenmittel (10, 11, 12) an den sichtbaren Flächen eine Beschichtung aufweist, beispielsweise eine Aluminium, Chrom und/oder Silber oder eine Legierung davon enthaltende Beschichtung.

7. Leuchtenanordnung (1) nach wenigstens einem der vorhergehenden Ansprüche, **dadurch gekennzeichnet, dass** das mindestens eine zusätzliche Zierblendenmittel (10, 11, 12) eine Befestigungseinrichtung für eine lösbare Befestigung an der Basis-Zierblendeneinrichtung (5) aufweist.

8. Leuchtenanordnung (1) nach Anspruch 7, **dadurch gekennzeichnet, dass** die Befestigungseinrichtung als Steck-, Clips- und/oder Rastverbindung ausgebildet ist.

9. Leuchtenanordnung (1) nach wenigstens einem der vorhergehenden Ansprüche, **dadurch gekennzeichnet, dass** das mindestens eine zusätzliche Zierblendenmittel als Blendenring (10, 11, 12) ausgebildet ist, welcher an einem zugeordneten zylinderförmigen Rohrabschnitt (7, 8, 9) der Basis-Zierblendeneinrichtung (5) zum Liefern eines erweiterten ansprechenden Gesamteindrucks anbringbar ist.

10. Leuchtenanordnung (1) nach wenigstens einem der vorhergehenden Ansprüche, **dadurch gekennzeichnet, dass** die Leuchtenanordnung (1) eine Blinkerleuchte, eine Abblendleuchte, eine Standleuchte, eine Fernleuchte, eine Bremsleuchte, eine Warnleuchte und/oder einen Reflexbereich aufeist.

11. Kraftfahrzeug mit einer Leuchtenanordnung (1), welche nach wenigstens einem der vorangehenden Ansprüche ausgebildet ist.
